# EUROPEAN PATENT APPLICATION

(11) **EP 4 825 527 A1**
(43) Date of publication of application: **21.10.2026**
(21) Application number: 26172896.8
(22) Date of filing: 16.04.2026
(51) Int. Cl.: B24B 1/04, B24B 19/14, B23P 9/00, B23P 9/04, B23Q 11/00, B23Q 11/10, C21D 6/00, C21D 7/04, C21D 7/08, C22F 1/00, H10P 10/00, B06B 3/00

(54) **NON-LINE-OF-SIGHT HOLE DRILLING OF COMPONENTS WITH ULTRASONIC IMPACT GRINDING AND APPARATUS THEREFOR**

(30) Priority: 16.04.2025 US 202519180672
(71) Applicant: RTX Corporation, Farmington, CT 06032 (US)
(72) Inventor: WANG, Zhigang, South Windsor, 06074 (US); KUCZEK, Andrzej E., Bristol, 06010 (US); PFLAUM, Konstantin Jeremias, Manchester, 06040 (US); FERNANDEZ, Robin H., Cornwall, 06759 (US); BARRON, Alan C., Jupiter, 33458 (US); ABDI, Ahmed Abdillahi, San Diego, 92115 (US)
(74) Representative: Dehns

(57) **Abstract**

An ultrasonic impact grinder apparatus (301; 501) configured to generate an ultrasonic displacement along a central axis (A) is provided with a non-line-of-sight tool (230; 330; 430; 530) having a tool body (232; 432) axially aligned with the central axis (A), a tool tip (235; 335; 435; 535), a narrowing horn (233; 433) disposed between the tool body (232; 432) and the tool tip (235...535), and a curved or cutout portion (240; 340; 440; 540) disposed on the non-line-of-sight tool (230...530) to permit ultrasonic impact grinding at the tool tip (235...535) without a line-of-sight of the tool tip (235...535) along the central axis (A). The non-line-of-sight tool (230...530) of the ultrasonic impact grinder apparatus (301; 501) can be positioned relative to the component (350; 550) such that the tip of the non-line-of-sight tool (230...530) is disposed to drill non-line-of-sight holes (360; 560) into the component (350; 550) without interfering with the component (350; 550) in order to drill the non-line-of-sight hole (360; 560) in the component (350; 550).

## Description

### FIELD OF THE INVENTION

The subject matter disclosed herein relates to ultrasonic impact grinding of ceramic matrix composite (CMC) components for gas turbine engines and, in particular, to an apparatus and method for non-line-of-sight hole drilling of CMC components via ultrasonic impact grinding (UIG).

### BACKGROUND OF THE INVENTION

A gas turbine engine includes a compressor for directing a primary fluid stream axially rearward, through a combustor and into a turbine. The turbine extracts power from a primary fluid stream and transmits the power through a shaft to rotate the forward-mounted compressor. A portion of the primary fluid stream is also directed to one or more secondary fluid streams for use in cooling components of the gas turbine engine. Disposed within the turbine section are alternating, annular stages of rotating blades and stationary vanes. The blades and vanes are disposed circumferentially about a central, longitudinal axis of the gas turbine engine.

Within the pressured hot section, both vanes and blades requiring cooling through shaped cooling holes, where one or more hollow passages extend through the interior of the airfoils for directing a secondary fluid stream. A plurality of cooling holes may pass through the airfoil walls and into the hollow passages, allowing the secondary fluid stream to discharge into the primary fluid stream. Preferably, the plurality of cooling holes is drilled from the direction of the airfoil trailing edge and at an acute angle to the airfoil surfaces for purposes of film cooling. The drilling direction and angle are necessary to ensure that the secondary fluid stream is discharged in a substantially rearward direction. This optimizes the cooling effectiveness of the secondary fluid stream and reduces aerodynamic losses in the primary fluid stream.

Typically, the standard methods used for drilling cooling holes in cast articles are laser and electro discharge machining (EDM). Laser drilling methods utilize short pulses of a high-energy beam, and EDM drilling methods pass an electrical charge through a gap between an electrode and a surface. Both the laser and the EDM drilling methods require a line of sight from the drilling equipment to the hole location, limiting the surfaces that may be drilled.

Due to the stagger of the airfoils on the platforms of the airfoils, portions of the duct surfaces are obstructed by the airfoil trailing edges and cannot be drilled using conventional laser or EDM drilling methods. U.S. Patent No. 9,561,555 to Koonankeil et al. discloses an apparatus for producing passages in a turbine vane with curved electrode guides to drill non-line-of-sight holes. However, such an EDM process cannot be used to drill cooling holes on chemical vapor infiltration (CVI) CMC components due to its very low electrical conductivity. Therefore, it is necessary to develop a machining technique to overcome the disadvantages of existing methods.

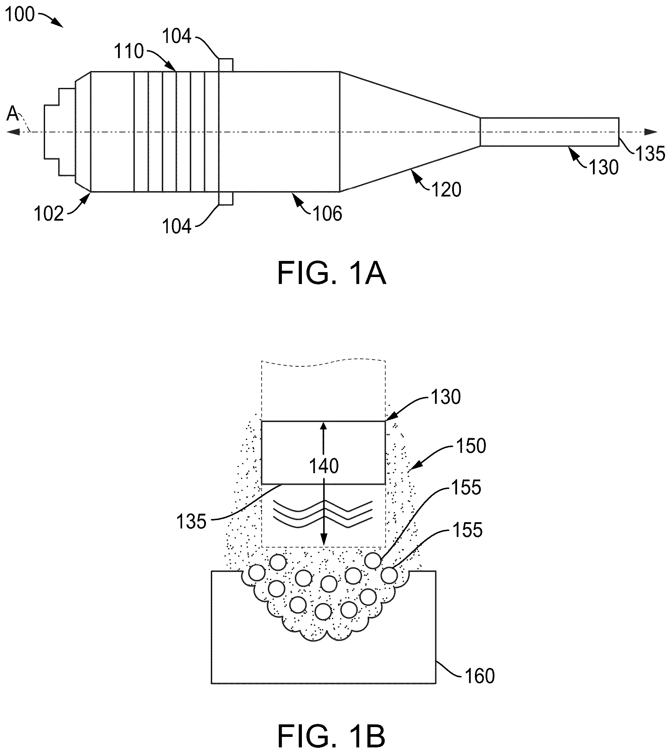

Ultrasonic impact grinding (UIG), also referred to as ultrasonic machining (USM), has been used to drill diffuser type of holes on CVI CMCs, as well as holes in environmental barrier coating (EBC) on nickel-alloy components. FIG. 1A shows a schematic of the basic elements of a typical loose abrasive UIG tooling system 100. System 100 typically includes a back mass 102, transducer 110, flange (i.e., node) 104, front mass 106, step horn 120, and ultrasonic tool (i.e., tool) 130.

In operation, electrical energy input to the transducer 110 is converted to mechanical vibrations along its longitudinal axis A at high frequency (usually at 20-40 kHz). The excited vibration is subsequently transmitted through the energy-focusing horn 120 to amplify the vibration amplitude and finally delivered to the tool tip 135 of the ultrasonic tool 130. Thus, the tool 130 which locates directly above the workpiece can vibrate along its longitudinal axis with a desired amplitude 140 as shown in FIG. 1B.

As illustrated in FIG. 1B, an abrasive slurry 150 (comprising a mixture of abrasive material particles 155, e.g., diamond, boron carbide, etc. suspended in water or oil) is provided constantly into the machining area, which flushes away the debris from the working zone. The vibration of the tool 130 causes the abrasive particles 155 held in the slurry 150 between the tool tip 135 and the workpiece 160 to impact the workpiece surface causing material removal by microchipping. Since actual machining is carried out by the abrasive particles 155, the tool 130 can be made from a softer material than the workpiece. Essentially, the UIG process is a large micro-cutting procedure, which involves abrasive particles cutting edges and can be understood as a micro scale material fracture process.

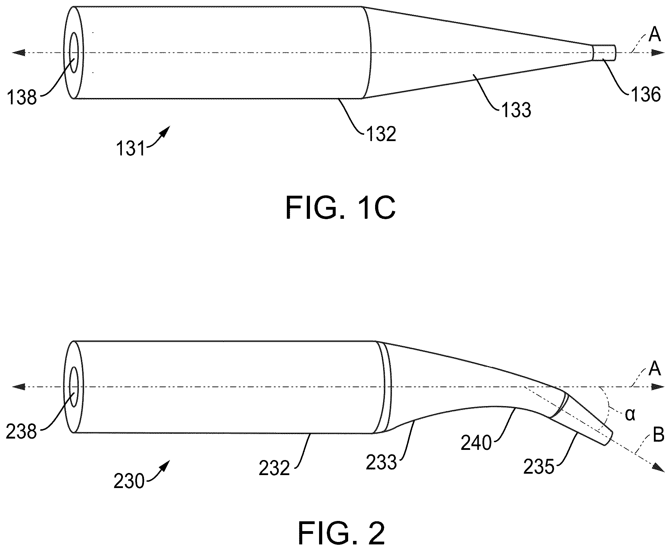

Published U.S. Patent App. No. 2024/0246192 A1 to Wang et al. discloses a tool 131, illustrated in FIG. 1C, for an ultrasonic impact grinding machine that is driven to vibrate along a longitudinal axis A. The tool 131 includes a hollow tool body 132 with a horn 133, and a hollow tip 136 extending from an end of the hollow tool body 132. The hollow tool body 132 and the hollow tip 136 are disposed about the longitudinal axis A and the hollow tip 136 and hollow tool body 132 are each defined in part by a common bore 138 extending along the longitudinal axis A. While useful for drilling holes in CVI CMC components, the tool 131 is still limited to line-of-sight operation.

The above information disclosed in this Background section is only for understanding of the background of the inventive concepts and, therefore, it may contain information that does not constitute prior art.

### SUMMARY OF THE INVENTION

The present invention is directed, in a first aspect, to a non-line-of-sight tooling system for ultrasonic impact grinding. The system includes a back mass disposed on a central axis, a transducer disposed on the central axis adjacent the back mass, a flange disposed on the central axis adjacent the transducer forming a node, a front mass disposed on the central axis on a side of the flange opposite the transducer, a booster disposed on the central axis adjacent the front mass, and a non-line-of-sight tool. The non-line-of-sight tool includes a tool body axially aligned with the central axis, a tool tip, a narrowing horn disposed between the tool body and the tool tip, and a curved or cutout portion disposed on the non-line-of-sight tool to permit ultrasonic impact grinding at the tool tip without a line-of-sight of the tool tip along the central axis.

In an embodiment of the above, the rear mass may be formed of steel and the front mass may be formed of aluminum.

In another embodiment according to any of the previous embodiments, the transducer may be configured to oscillate at a frequency in a range of 20 kHz to 40 kHz and generate a longitudinal vibration along the central axis.

In a further embodiment according to any of the previous embodiments, the non-line-of-sight tool may be formed of titanium.

In yet another embodiment according to any of the previous embodiments, the curved or cutout portion may be a curved portion, wherein the curved portion may be disposed on the narrowing horn between the tool body and the tool tip, and the tool tip may be disposed on a second axis deflected from the central axis by an acute angle α based upon the curved portion.

In an embodiment according to any of the previous embodiments, the curved or cutout portion may be a cutout portion of the tool body and/or narrowing horn that extends beyond the central axis.

In another embodiment according to any of the previous embodiments, the non-line-of-sight tool may include a hollow opening extending therethrough.

The present invention is also directed, in a second aspect, to a non-line-of-sight tool for ultrasonic impact grinding. The non-line-of-sight tool includes a tool body axially aligned with a central axis, a tool tip, a narrowing horn disposed between the tool body and the tool tip, and a curved or cutout portion disposed to permit ultrasonic impact grinding at the tool tip without a line-of-sight of the tool tip along the central axis.

In an embodiment of the above, the non-line-of-sight tool may be formed of titanium.

In another embodiment according to any of the previous embodiments, the curved or cutout portion may be a curved portion and wherein the curved portion may be disposed on the narrowing horn between the tool body and the tool tip, and the tool tip may be disposed on a second axis deflected from the central axis by an acute angle α based upon the curved portion.

In a further embodiment according to any of the previous embodiments, the curved or cutout portion may be a cutout portion of the tool body and/or narrowing horn that extends beyond the central axis.

In yet another embodiment according to any of the previous embodiments, the non-line-of-sight tool may include a hollow opening extending therethrough.

The present invention is further directed, in a third aspect, to a method for ultrasonic impact grinding non-line-of-sight holes in a component. The method includes providing an ultrasonic impact grinder apparatus that is configured to generate an ultrasonic displacement along a central axis, and providing a non-line-of-sight tool having a tool body axially aligned with the central axis, a tool tip, a narrowing horn disposed between the tool body and the tool tip, and a curved or cutout portion disposed on the non-line-of-sight tool to permit ultrasonic impact grinding at the tool tip without a line-of-sight of the tool tip along the central axis. The method further includes positioning the non-line-of-sight tool of the ultrasonic impact grinder apparatus relative to the component such that the tip of the non-line-of-sight tool is disposed to drill non-line-of-sight holes into the component without interfering with the component, and operating the ultrasonic impact grinder apparatus to drill the non-line-of-sight hole in the component.

In an embodiment of the above, operating the ultrasonic impact grinder apparatus may include driving a transducer to oscillate at a frequency in a range of 20 kHz to 40 kHz and generating a longitudinal vibration along the central axis.

In another embodiment according to any of the previous embodiments, the component may be a ceramic matrix composite (CMC) component.

In a further embodiment according to any of the previous embodiments, the component may be a nickel-based component having a thermal barrier coating (TBC) and the non-line-of-sight holes may be drilled in the TBC of the nickel-based component.

In yet another embodiment according to any of the previous embodiments, the curved or cutout portion may be a curved portion, wherein the curved portion of the non-line-of-sight tool may be disposed on the narrowing horn between the tool body and the tool tip, and the tool tip may be disposed on a second axis deflected from the central axis by an acute angle α based upon the curved portion.

In an embodiment according to any of the previous embodiments, the curved or cutout portion of the non-line-of-sight tool may be a cutout portion of the tool body and/or narrowing horn that extends beyond the central axis.

In another embodiment according to any of the previous embodiments, the non-line-of-sight tool may include a hollow opening extending therethrough, and the method may further include providing slurry via the hollow opening.

In a further embodiment according to any of the previous embodiments, the non-line-of-sight tool may include a hollow opening extending therethrough, and the method may further include removing slurry and micro-fractured material via the hollow opening.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1A is a schematic diagram of an ultrasonic impact grinder usable with the present disclosure;
FIG. 1B is a close-up schematic view of loose abrasive ultrasonic machining usable with the present disclosure;
FIG. 1C is a schematic perspective view of an unmodified ultrasonic tooling design;
FIG. 2 is a schematic perspective view of an embodiment of a non-line-of-sight ultrasonic tooling design in accordance with the present disclosure;
FIG. 3A is a perspective view of an embodiment of an ultrasonic impact grinder tooling design with interference for drilling non-line-of-sight holes;
FIG. 3B is a perspective view of an embodiment of an interference-free ultrasonic impact grinder tooling design for drilling non-line-of-sight holes in accordance with the present disclosure;
FIG. 4 is a perspective view of another embodiment of an interference-free ultrasonic impact grinder tooling design for drilling non-line-of-sight holes in accordance with the present disclosure;
FIG. 5A is a perspective view of an embodiment of an interference-free ultrasonic impact grinder tooling design of FIG. 4 for drilling non-line-of-sight holes in accordance with the present disclosure;
FIG. 5B is a close-up of the perspective view of the embodiment of FIG. 5A illustrating the interference-free aspect of the ultrasonic impact grinder tooling design for drilling non-line-of-sight holes in accordance with the present disclosure; and
FIG. 6 is a flow diagram of an example method in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

As discussed in the Background above, existing ultrasonic impact grinding (UIG) apparatus are limited to line-of-sight hole drilling based upon their axial design. Embodiments of the present disclosure overcome this deficiency by using tooling designs that are curved or include a cutout portion to allow the tooling design to guide ultrasonic acoustic energy to the tip to drill a hole in a component without an axial line of sight. Accordingly, it is an object of the present disclosure to provide non-line-of-sight hole drilling of components such as CMC airfoils with ultrasonic impact grinding and an apparatus therefor.

In accordance with the present disclosure, an ultrasonic impact grinder apparatus configured to generate an ultrasonic displacement along a central axis is provided with a non-line-of-sight tool having a tool body axially aligned with the central axis, a tool tip, a narrowing horn disposed between the tool body and the tool tip, and a curved or cutout portion disposed on the non-line-of-sight tool to permit ultrasonic impact grinding at the tool tip without a line-of-sight of the tool tip along the central axis. The non-line-of-sight tool of the ultrasonic impact grinder apparatus can be positioned relative to the component such that the tip of the non-line-of-sight tool is disposed to drill non-line-of-sight holes into the component without interfering with the component in order to drill the non-line-of-sight hole.

With reference to FIG. 2, an embodiment of a curved tool 230 for an ultrasonic impact grinder in accordance with the present disclosure is illustrated.

The curved tool 230 may, for example, be formed of a titanium alloy and include a proximal end adjacent a horn of the ultrasonic impact grinder (see FIG. 1A) and a distal end with tool tip 235. The tool tip 235 may be shaped for directing acoustic energy and may include another horn or similar tapering shape for directing ultrasonic acoustic energy.

The curved tool 230 includes a tool body 232 that is axially aligned with a central axis A, the tool tip 235, a narrowing horn 233 disposed between the tool body 232 and the tool tip 235, and a curved portion 240 disposed to permit ultrasonic impact grinding at the tool tip 235 without a line-of-sight of the tool tip 235 along the central axis A.

In one or more embodiments, the curved tool 230 may include a hollow opening 238 extending therethrough as a conduit to permit the introduction of a slurry and/or the removal of a slurry and microchipped material (see, e.g., slurry 150 of FIG. 1B) at the tool tip 235.

In the embodiment of FIG. 2, the curved portion 240 is disposed on the narrowing horn 233 between the tool body 232 and the tool tip 235. While the tool body is disposed on central axis A, the tool tip 235 is disposed on a second axis B deflected from the central axis A by an acute angle α based upon the curved portion 240 causing the deflection.

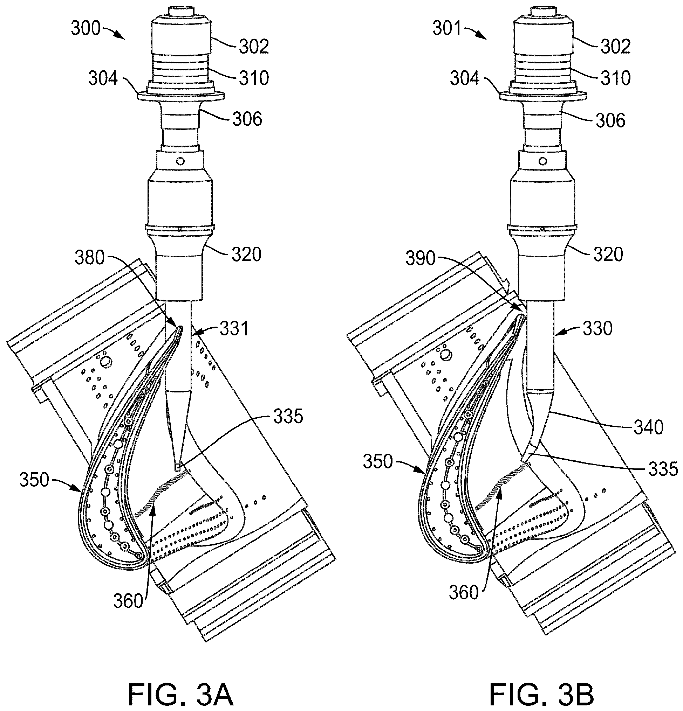

With reference to FIGS. 3A and 3B, a comparison is illustrated between an interference condition resulting from an unmodified tool 331 and an interference-free condition resulting from curved tool 330 in accordance with an embodiment of the present disclosure.

The ultrasonic impact grinder apparatuses 300 and 301 each include a back mass 302 disposed on a central axis, a transducer 310 disposed on the central axis adjacent the back mass 302, a flange 304 disposed on the central axis adjacent the transducer 310 forming a node, a front mass 306 disposed on the central axis on a side of the flange 304 opposite the transducer 310, and a booster 320 disposed on the central axis adjacent the front mass 306. The transducer 310 may oscillate at a frequency between 20 kHz to 40 kHz (e.g., 38.257 kHz). The booster 320 may amplify the vibration amplitude to the tool 330, 331 with a gain between 1.5:1 and 5:1, as well as provide another clamping point for impact grinders 300 and 301.

The back mass 302 may be formed of steel or other dense metal and the front mass 306 may be formed of aluminum or other lightweight metal in order to provide a higher impedance at the back mass 302 relative to the front mass 306 so as to direct the ultrasonic acoustic energy and improve the amplitude at the tool tip 335.

In FIG. 3A, unmodified tool 331 would cause interference 380 when tool tip 335 is positioned to drill non-line-of-sight holes 360 in component 350, which may for example be a CMC component in the form of an airfoil, wherein due to the stagger of the airfoil on the platform, portions of the duct surfaces for non-line-of-sight holes 360 are obstructed by the airfoil trailing edge interfering with tool 331.

In contrast, as illustrated in FIG. 3B, curved tool 330 in accordance with an embodiment of the present disclosure includes curved portion 340 that angles/offsets tool tip 335 so as to drill non-line-of-sight holes 360 in component 350, wherein the curved tool 330 has a clearance 390 with respect to the airfoil trailing edge of component 350.

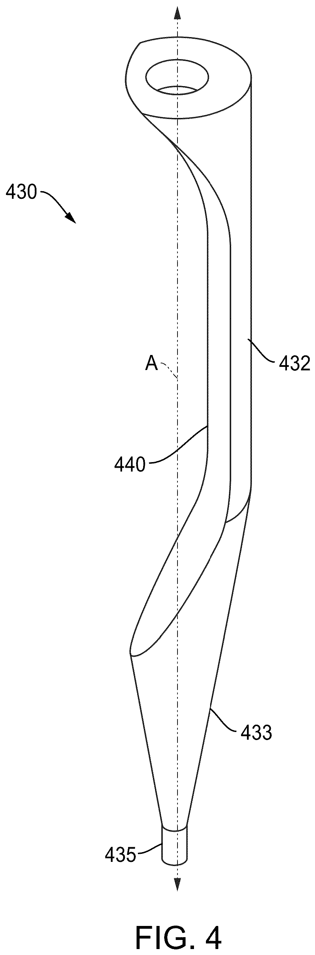

With reference to FIG. 4, an embodiment of a cutout tool 430 for an ultrasonic impact grinder in accordance with the present disclosure is illustrated.

The cutout tool 430 may, for example, be formed of a titanium alloy and include a proximal end adjacent a horn of the ultrasonic impact grinder (see FIG. 1A) and a distal end with tool tip 435. The tool tip 435 may be shaped for directing acoustic energy.

The cutout tool 430 includes a tool body 432 that is axially aligned with a central axis A with respect to its diameter (without the cutout portion 440), the tool tip 435, a narrowing horn 433 disposed between the tool body 432 and the tool tip 235, and a cutout portion 440 disposed to permit ultrasonic impact grinding at the tool tip 435 without a line-of-sight of the tool tip 435 along the central axis A.

In the embodiment of FIG. 4, the cutout portion 440 removes material of the tool body 432 and material from the narrowing horn 433 between the tool body 432 and the tool tip 435. While the tool body is disposed on central axis A, the cutout portion 440 extends beyond the central axis A. Thus, the cutout portion 440 may permit a hole to be drilled by tool tip 435 even if a line-of-sight is obstructed along axis A.

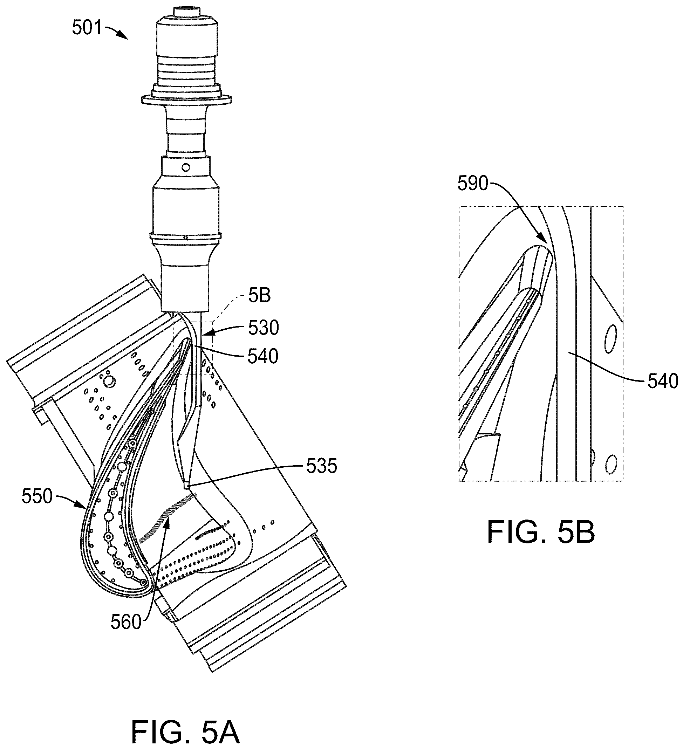

FIGS. 5A and 5B illustrate an ultrasonic impact grinder apparatus 501 that substantially corresponds with ultrasonic impact grinder apparatus 301 of FIG. 3B, but which employs a cutout tool 530 corresponding to cutout tool 430 of FIG. 4 rather than the curved tool 330 of FIG. 3B.

FIG. 5A illustrates a cutout tool 530 in accordance with an embodiment of the present disclosure includes cutout portion 540 that permits tool tip 535 to drill non-line-of-sight holes 560 in component 550, wherein the cutout tool 530 has, as more clearly illustrated in close-up view FIG. 5B, a clearance 590 with respect to the airfoil trailing edge of component 550 due to cutout portion 540.

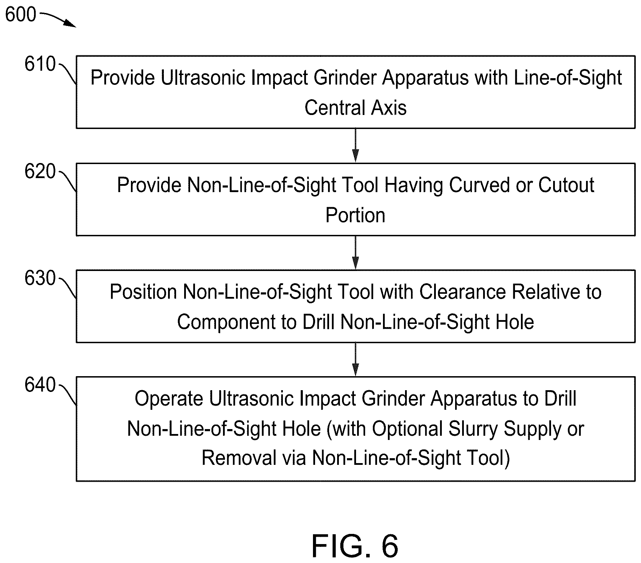

FIG. 6 is a flow diagram of an example method 600 for ultrasonic impact grinding non-line-of-sight holes in a component. In one or more embodiments, the component may be a ceramic matrix composite (CMC) component. In other embodiments, the component may be a nickel-based component having a thermal barrier coating (TBC) and the non-line-of-sight holes are drilled in the TBC of the nickel-based component.

A first step 610 of method 600 includes providing an ultrasonic impact grinder apparatus that is configured to generate an ultrasonic displacement along a central axis that defines a line-of-sight.

In step 620, a non-line-of-sight tool is provided. The non-line-of-sight tool has a tool body axially aligned with the central axis, a tool tip, a narrowing horn disposed between the tool body and the tool tip, and a curved or cutout portion disposed on the non-line-of-sight tool to permit ultrasonic impact grinding at the tool tip without a line-of-sight of the tool tip along the central axis. In one or more embodiments, the curved or cutout portion may be a curved portion and wherein: the curved portion of the non-line-of-sight tool is disposed on the narrowing horn between the tool body and the tool tip; and the tool tip is disposed on a second axis deflected from the central axis by an acute angle α based upon the curved portion. In other embodiments, the curved or cutout portion of the non-line-of-sight tool may include a cutout portion of the tool body and/or narrowing horn that extends beyond the central axis.

In step 630, the non-line-of-sight tool of the ultrasonic impact grinder apparatus is positioned relative to the component such that the tip of the non-line-of-sight tool is disposed to drill non-line-of-sight holes into the component without interfering with the component.

In step 640, the ultrasonic impact grinder apparatus is operated to drill the non-line-of-sight hole in the CMC component. In one or more embodiments, operating the ultrasonic impact grinder apparatus may include driving a transducer to oscillate at 38.257 kHz and generate a longitudinal vibration along the central axis. In other embodiments, non-line-of-sight tool may include a hollow opening extending therethrough, and the method further may further include providing slurry via the hollow opening and/or removing slurry and micro-fractured material via the hollow opening.

Embodiments in accordance with the present disclosure enable interference-free drilling of non-line-of-sight holes on CMC materials or EBC-coated nickel with the UIG process. With the unique curved or cutout tooling design, the longitudinal vibration may be effectively transferred to the tool tip to drill non-line-of-sight holes such as diffuser and metering holes. Also, when machining holes in airfoils, with less turn of vanes using the curved or cutout ultrasonic tooling, embodiments of the present disclosure may provide additional space for the delivery of slurry to the machining to improve producibility of holes.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A non-line-of-sight tool (230; 330; 430; 530) for ultrasonic impact grinding, comprising:
a tool body (232; 432) axially aligned with a central axis (A);
a tool tip (235; 335; 435; 535);
a narrowing horn (233; 433) disposed between the tool body (232; 432) and the tool tip (235...535); and
a curved or cutout portion (240; 340; 440; 540) disposed to permit ultrasonic impact grinding at the tool tip (235...535) without a line-of-sight of the tool tip (235...535) along the central axis (A).

2. The non-line-of-sight tool of claim 1, wherein the non-line-of-sight tool (230... 530) is formed of titanium.

3. The non-line-of-sight tool of claim 1 or 2, wherein the curved or cutout portion is a curved portion (240; 340) and wherein:
the curved portion (240; 340) is disposed on the narrowing horn (233) between the tool body (232) and the tool tip (235); and
the tool tip (235; 335) is disposed on a second axis (B) deflected from the central axis (A) by an acute angle α based upon the curved portion (240; 340).

4. The non-line-of-sight tool of claim 1 or 2, wherein the curved or cutout portion is a cutout portion (440; 540) of the tool body (432) and/or narrowing horn (433) that extends beyond the central axis (A).

5. The non-line-of-sight tool (30... 530) of any preceding claim, wherein the non-line-of-sight tool (230... 530) includes a hollow opening (238) extending therethrough.

6. A non-line-of-sight tooling system for ultrasonic impact grinding, comprising:
a back mass (302) disposed on a central axis (A);
a transducer (310) disposed on the central axis (A) adjacent the back mass (302);
a flange (304) disposed on the central axis (A) adjacent the transducer (310) forming a node;
a front mass (306) disposed on the central axis (A) on a side of the flange (304) opposite the transducer (310);
a booster (320) disposed on the central axis (A) adjacent the front mass (306); and
the non-line-of-sight tool (230...530) of any preceding claim.

7. The non-line-of-sight tooling system of claim 6, wherein the rear mass (302) is formed of steel and the front mass (306) is formed of aluminum.

8. The non-line-of-sight tooling system of claim 6 or 7, wherein the transducer (310) is configured to oscillate at a frequency in a range of 20 kHz to 40 kHz and generate a longitudinal vibration along the central axis (A).

9. A method for ultrasonic impact grinding non-line-of-sight holes (360; 560) in a component (350; 550), comprising:
providing an ultrasonic impact grinder apparatus (301; 501) that is configured to generate an ultrasonic displacement along a central axis (A);
providing a non-line-of-sight tool (230; 330; 430; 530) having a tool body (232; 432) axially aligned with the central axis (A), a tool tip (235; 335; 435; 535), a narrowing horn (233; 433) disposed between the tool body (232; 432) and the tool tip (235...535), and a curved or cutout portion (240; 340; 440; 540) disposed on the non-line-of-sight tool (30... 530) to permit ultrasonic impact grinding at the tool tip (235...535) without a line-of-sight of the tool tip (235...535) along the central axis (A);
positioning the non-line-of-sight tool (230... 530) of the ultrasonic impact grinder apparatus (301; 501) relative to the component (350; 550) such that the tip (235...535) of the non-line-of-sight tool (230... 530) is disposed to drill non-line-of-sight holes (360; 560) into the component (350; 550) without interfering with the component (350; 550); and
operating the ultrasonic impact grinder apparatus (301; 501) to drill the non-line-of-sight hole (360; 560) in the component (350; 550).

10. The method of claim 9, wherein operating the ultrasonic impact grinder apparatus (301; 501) includes driving a transducer (310) to oscillate at a frequency in a range of 20 kHz to 40 kHz and generating a longitudinal vibration along the central axis (A).

11. The method of claim 9 or 10, wherein the component (350; 550) is a ceramic matrix composite (CMC) component.

12. The method of claim 9 or 10, wherein the component (350; 550) is a nickel-based component having a thermal barrier coating (TBC) and the non-line-of-sight holes (360; 560) are drilled in the TBC of the nickel-based component (350; 550).

13. The method of any of claims 9 to 12, wherein the curved or cutout portion is a curved portion (240; 340), and wherein:
the curved portion (240; 340) of the non-line-of-sight tool (230; 330) is disposed on the narrowing horn (233) between the tool body (232) and the tool tip (235; 335); and
the tool tip (235; 335) is disposed on a second axis (B) deflected from the central axis (A) by an acute angle α based upon the curved portion (240; 340).

14. The method of any of claims 9 to 12, wherein the curved or cutout portion is a cutout portion (440; 540) of the tool body (432) and/or narrowing horn (433) that extends beyond the central axis (A).

15. The method of any of claims 9 to 14, wherein the non-line-of-sight tool (230... 530) includes a hollow opening (238) extending therethrough, and the method further comprises providing slurry via the hollow opening (238), and optionally removing slurry and micro-fractured material via the hollow opening (238).
